# FASCICULE DE BREVET EUROPEEN

(11) **EP 4 498 865 B1**
(45) Date de publication et mention de la délivrance du brevet: **22.10.2025**
(21) Numéro de dépôt: 23714518.0
(22) Date de dépôt: 23.03.2023
(51) Int. Cl.: A47B 96/20, B27N 1/00, B27N 3/00, B27N 3/04, B27N 3/18, B27N 3/20, B29C 70/08, B29C 51/00, B29C 51/02, B29C 51/14, B29C 51/26, B29C 70/12, B29C 70/50, D01G 11/00, D04H 1/4274, D04H 1/58

(54) **MATÉRIAU RIGIDE ET COLORÉ POUR LA CONSTRUCTION ET L'AMEUBLEMENT**
GEFÄRBTES STARRES MATERIAL FÜR KONSTRUKTION UND MÖBEL
RIGID COLORED MATERIAL FOR CONSTRUCTION AND FURNITURE

(30) Priorité: 25.03.2022 FR 2202713
(43) Date de publication de la demande: 05.02.2025
(73) Titulaire: Maximum SAS, 94200 Ivry-sur-Seine (FR); Bernoud, Armand, 75018 Paris (FR); Guignard de la Bigne, Romée, 75011 Paris (FR); De Gaulle, Basile, 75004 Paris (FR)
(72) Inventeur: BERNOUD, Armand, 75018 Paris (FR); DE LA BIGNE DE VILLENEUVE, Romée, 75011 Paris (FR); DE GAULLE, Basile, 75004 Paris (FR)
(74) Mandataire: Spigarelli, Alfred
(86) Numéro de dépôt international: PCT/EP2023/057574
(87) Numéro de publication internationale: WO 2023/180497

(56) Documents cités:
- WO-A1-98/36114
- US-A1- 2018 272 558
- US-A1- 2019 345 338

## Description

### Domaine technique de l'invention

L'invention concerne, de façon générale, le domaine technique des matériaux rigides à particules, tel que le médium, destinés à l'obtention de panneaux plans rigides à des dimensions prédéfinies, ou à la réalisation d'éléments d'ameublement tel que des dossiers ou des assises de chaises.

L'invention se rapporte plus spécifiquement à un matériau rigide et coloré à faible impact environnemental faible ou négatif obtenu à partir de composants recyclés et à son procédé de fabrication.

### État de la technique antérieure

Des panneaux de matériau composés de fibres de bois sont couramment employés dans la construction ou la fabrication de meubles. Parmi les panneaux en fibres de bois connus, le MDF (acronyme de l'appellation anglaise Medium Density Fiberboard) aussi appelé médium est fortement apprécié pour sa solidité, son faible coût et sa polyvalence d'utilisation.

Le médium est obtenu à partir de particules de bois courant qui ont subi un défibrage à la vapeur. Après leur défibrage, les fibres ligneuses sont agglomérées à un liant à base d'urée-formol ou de mélamine-formol et le mélange ainsi formé est thermopressé pour former des panneaux qui sont découpés à différentes dimensions standards. Malgré ses nombreux avantages, le médium peut être néfaste à la santé des personnes qui le travaillent en ce qu'il contient du formaldéhyde.

De plus, dans un contexte de raréfaction des matières premières, il est de plus en plus nécessaire de produire des matériaux à partir de matières provenant du recyclage. Il existe donc un besoin environnemental et économique pour un matériau rigide et sain utilisable à la fois pour la construction et l'ameublement obtenu à partir de matériels à recycler. Depuis l'approbation par le parlement européen en 2018 de la directive relative aux déchets, ce besoin est devenu une obligation légale puisqu'en 2025 les pays de l'Union européenne devront collecter séparément les textiles.

La demande de brevet WO98/36114 décrit un feutre d'isolation constitué de fibres textiles et d'un liant époxy qui peut être en poudre.

La présente invention telle que définie dans les revendications a pour but de remédier à tout ou partie des inconvénients de l'état de la technique et de répondre au besoin environnemental et économique indiqué ci-dessus en proposant notamment un matériau rigide sain aux propriétés similaires à celles du médium, et obtenu à partir de matières provenant du recyclage des vêtements usagés et des poudres de peintures à enfouir ou à incinérer.

À cet effet, il est proposé, selon un premier aspect de l'invention, un matériau rigide pour la construction ou l'ameublement comprenant des particules fibreuses reliées entre elles par un liant appartenant à la famille des matériaux thermoplastiques ou thermodurcissables dans lequel les particules fibreuses sont principalement des fibres textiles et le liant est composé de poudre de peinture principalement constituées d'un liant de peinture, de pigments, de charges et d'additifs divers et provenant des pertes de peinture non chauffées récupérées. La proportion de liant dans le poids total est comprise entre 10% et 50%. Elle est de préférence de 20%, 30% ou 40%.

Préférentiellement, les fibres textiles sont obtenues par effilochage de pièces textiles dont au moins une partie provient de vêtements usagés.

Préférentiellement, la densité du matériau rigide est comprise entre 700kg/m³ et 1000kg/m³, de préférence 850kg/m³.

Avantageusement, les fibres textiles comprennent un mélange de fibres textiles naturelles et synthétiques telles que des fibres de coton ou de polyester, et/ou le matériau rigide est teinté dans la masse par la couleur des fibres textiles utilisés.

Préférentiellement, les poudres de peinture utilisées comme liant sont majoritairement composées d'époxy, de polyester, de polyuréthane ou d'acryliques, et/ou les poudres de peinture utilisées comme liant comprennent des poudres de peinture, d'apprêt, de vernis, ou un mélange de ces poudres.

Avantageusement, le matériau rigide comprend en outre au moins un adjuvant tel qu'un antifungique, un hydrofuge et/ou un ignifugeant.

Préférentiellement, le matériau rigide est obtenu par thermopressage des fibres de textile et du liant, et/ou son épaisseur finale est obtenue par ponçage, par calandrage ou par pressage à froid.

Il est proposé, selon un deuxième aspect de l'invention, un procédé de fabrication d'un matériau rigide pour la construction ou l'ameublement comprenant une étape de collecte de poudres de peinture dans des cabines de peinture pour obtenir un liant en poudre thermoplastique ou thermodurcissable, une étape de mélange d'un liant thermoplastique ou thermodurcissable en poudre avec des fibres textiles dans une proportion de liant comprise entre 20 et 30% du poids total, une étape d'épandage des fibres textiles mélangées au liant pour former un matelas ; et une étape de pressage à chaud dudit matelas à une température dépendant de la nature du liant dans laquelle, préférentiellement, après le pressage à chaud le matériau subit une étape de refroidissement avec maintien de la pression.

Avantageusement, le procédé comprend en outre, pour la préparation des fibres textiles, une étape de triage des couleurs des pièces textiles à recycler, une étape de triage pour écarter les textiles non effilochables, une étape de délissage, une étape de défibrage par effilochage mécanique des pièces textiles triés, et/ou une étape de séparation des fibres textiles par soufflage.

Préférentiellement, le procédé de fabrication comprend également une étape de collecte de vêtements usagers non réutilisables pour obtenir au moins une partie desdites fibres textiles, ou d'autres pièces de textile à recycler.

Avantageusement, le procédé de fabrication comprend en outre une étape de pulvérisation d'au moins un adjuvant, et/ou une étape de calandrage et/ou de ponçage après l'étape de pressage à chaud ou de refroidissement.

Préférentiellement, le procédé comprend en outre une étape de découpage dudit matériau rigide en panneaux aux dimensions requises, ou que l'étape de pressage à chaud s'effectue dans un moule pour former des éléments d'ameublement.

Avantageusement, le pressage à chaud s'effectue à une température comprise entre 160°C et 200°C, par exemple 180°C, pendant une période comprise entre 6 et 10 min par exemple 8 min, et/ou une pression comprise entre 10 kg/cm2 et 40 kg/cm2 par exemple 20 ou 30 kg/cm2 ; et/ou l'étape de mélange du liant en poudre avec les fibres textiles s'effectue à chaud.

D'autres caractéristiques et avantages de l'invention sont mis en évidence par la description ci-après d'exemples non limitatifs de réalisation des différents aspects de l'invention.

### Brève description des figures

La description se réfère aux figures annexées qui sont aussi données à titre d'exemples de réalisation non limitatifs de l'invention :
La figure 1 représente un panneau obtenu avec le matériau de l'invention ;
La figure 2 représente une chaise réalisée à partir du matériau de l'invention ;
La figure 3 montre les différents états du matériau de l'invention au cours de sa fabrication ;
La figure 4 illustre le processus de préparation des fibres textiles destinées à la réalisation du matériau de l'invention ;
La figure 5 illustre le processus de préparation de la poudre de peinture servant de liant aux fibres textiles ; et
La figure 6 illustre le processus de fabrication d'une plaque de matériau selon l'invention.

Pour plus de clarté, les éléments identiques ou similaires sont repérés par des signes de référence identiques sur l'ensemble des figures.

### Description détaillée d'un mode de réalisation

En Europe 5,8 millions de tonnes de déchets textiles sont jetées chaque année dont seulement 1,5 million de tonnes sont triées afin d'être recyclées. En France en 2019, 196 054 tonnes de textiles et chaussures ont été triées par les opérateurs de la filière du recyclage des vêtements usagers. En 2020, ce volume était de 156 202 tonnes soit une baisse de 20% de la collecte principalement due à la pandémie de la COVID 19. Un volume de 56,5% des vêtements usagers collectés et triés est destiné à être réutilisés en tant que vêtements de seconde main. Un volume de 33,3% de ce textile est exporté dans des pays à bas coût de main-d'œuvre pour être recyclé pour d'autres usages industriels non vestimentaires et 9,1% sont recyclés pour produire du combustible pour les cimenteries françaises. En outre, il existe un potentiel de textile actuellement non collecté représentant 400 000 tonnes en France et jusqu'à 5 000 000 de tonnes au niveau européen qui peut être mobilisé si de nouveaux débouchés de recyclage industriel sont mis en œuvre. L'invention utilise le volume considérable représenté par ce textile à recycler pour produire un matériau rigide à base de fibres textiles recyclées apte à être utilisé en lieu et place du médium. La fabrication du matériau décrit dans la suite à partir de cette masse de textile non réutilisable et disponible à bas coût répond au besoin environnemental, d'autant plus que la matière textile qui ne sera plus exportée réduira l'empreinte carbone actuelle de la filière de recyclage du textile, et aux contraintes de l'industrialisation d'un procédé de production d'un tel matériau.

L'autre composant principal du matériau rigide décrit ci-après est le liant qui permettra d'agglomérer les fibres textiles pour former des panneaux ou des éléments d'ameublement présentant des caractéristiques mécaniques et opérationnelles similaires à celles du médium. La poudre époxy perdue dans les cabines de peinture électrostatique est utilisée comme liant pour la fabrication de ce matériau rigide.

La poudre époxy est de plus en plus utilisée pour le revêtement de surface et ses qualités physico-chimiques. Les poudres de peintures sont constituées de 4 éléments principaux : un liant de peinture, des pigments, des charges, et des additifs divers. Le liant de peinture est le composant majoritaire des poudres de peinture. Il assure le lien entre tous les composants de la peinture et l'adhérence de la peinture au support à peindre. Le liant de peinture se présente en poudre et peut être à base de résine époxydique (aussi appelée époxy), d'époxy-polyester, de résine polyester durcie à l'isocyanurate de triglycidyle, d'acrylique-uréthane, ou de polyester-uréthane. Bien que dans la suite de la description il est fait référence à l'époxy comme liant, n'importe lequel des liants utilisés dans les poudres de peinture peut être mis en œuvre pour fabriquer le matériau rigide de l'invention, comme ceux indiqués ci-dessus.

Dans les procédés de peinture à la poudre, la poudre époxy est appliquée par un phénomène électrostatique : la poudre est projetée électro-statiquement sur une pièce à revêtir, généralement une pièce métallique, à l'aide d'un pistolet électrostatique. Le plastique est alors fondu sur la pièce qui est ensuite séchée dans un four ou sous UV. La peinture à la poudre se fait dans une cabine de peinture conçue spécifiquement pour cette utilisation. Ces cabines de peinture présentent un système intégré de récupération par aspirations des poudres permettant de collecter les particules qui échappent à l'attraction électrostatique du support à peindre lors de la pulvérisation ce qui permet leur recyclage. Ainsi les déchets du processus de pulvérisation de l'époxy qui représentent 40% de la poudre pulvérisée durant le processus de peinture se retrouvent sur le sol de la cabine et dans les filtres du système d'aspiration principalement sous la forme de poudre (60% des déchets de pulvérisation collectés). Cette poudre perdue qui peut être récupérée ne peut pas être réutilisée pour la peinture, car cette poudre est un mélange des différents produits pulvérisés tels des peintures de différentes pigmentations, des apprêts ou des vernis. Cependant, la poudre récupérée peut être utilisée comme liant pour réaliser le matériau rigide décrit ci-dessous.

Au-delà de ses propriétés mécaniques qui en font un produit très prisé dans l'industrie, le principal avantage des poudres époxy est que, contrairement aux peintures liquides, elles ne contiennent pas de solvant. Ce procédé de revêtement de surface ne dégage donc pas de COV (Composés Organiques Volatils) et leur usage une fois appliqué est très sain pour les utilisateurs. Néanmoins, il génère beaucoup de déchets dangereux qui ne sont pas recyclés dans l'industrie actuellement et qu'il faut donc incinérer ou pire enfouir pour s'en débarrasser. La quantité de poudre époxy usagée est estimée annuellement à 27 000 tonnes en France et dix fois plus en Europe. Le développement de filière de recyclage de ce déchet industriel dangereux, comme proposé ici est donc un enjeu environnemental majeur. Le coût de traitement des déchets époxy est de 400 € la tonne pour le producteur de ces déchets ce qui en fait une matière à coût négatif pour ceux qui peuvent la réutiliser.

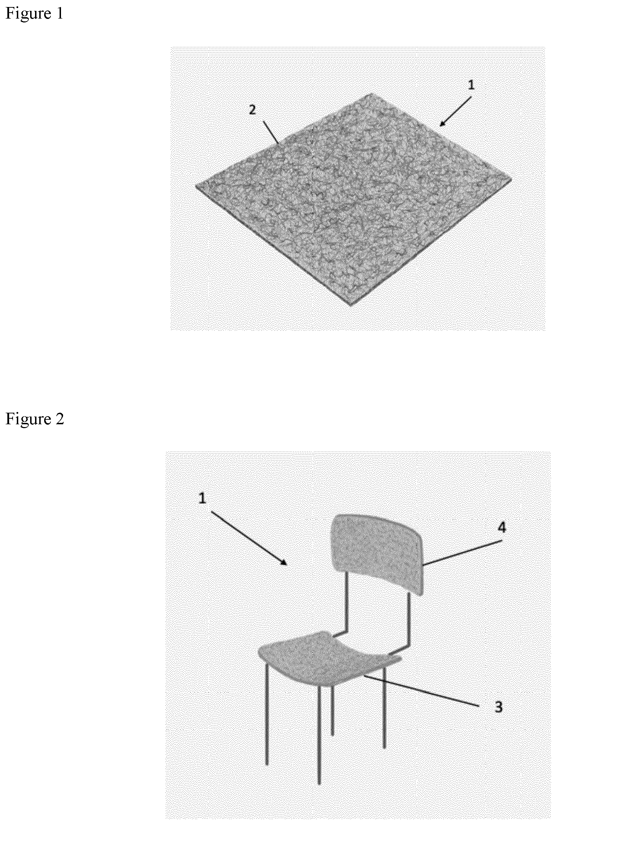

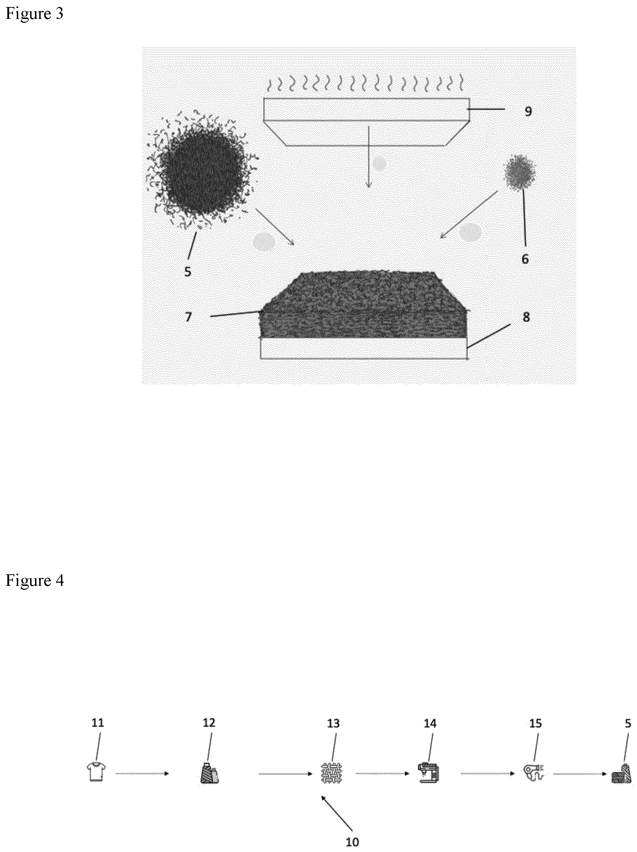

L'invention concerne un matériau rigide 1 qui comme illustré à la figure 3 [Fig.3] est composé principalement, mais pas uniquement de fibres textiles 5 qui peuvent être issues de vêtements usagés, de textiles non usagés (par exemple des chutes de production, des fins de série, ou des invendus), ou d'un mélange des deux. Le matériau rigide 1 de l'invention comprend également un liant en poudre 6 provenant des pertes de poudre de peinture comme expliqué ci-dessus. Les fibres textiles 5 et le liant en poudre 6 sont mélangés pour former un matelas 7. Le matelas 7 comprend une proportion en poids de fibres textiles 5 comprises entre 60% et 80%, préférentiellement 70%, et de liant en poudre 6 comprise entre 10% et 50%, préférentiellement 20%, 30% ou 40%. Comme indiqué dans l'introduction de cette description, ce matériau rigide 1 est destiné principalement, mais pas uniquement à la construction, par exemple sous la forme de panneaux 2 découpés à des dimensions prédéfinies (telles que celles des panneaux de médium commercialisés) comme montré à la figure 1 [Fig. 1], et à l'ameublement comme une assise de chaise 3 ou un dossier de chaise 4 représentés à la figure 2 [Fig. 2]. Il peut être utilisé pour d'autres usages tels que tous ceux du médium auquel il s'apparente par ses caractéristiques mécaniques et ses modalités de mise en œuvre. Le matériau rigide 1 se positionne comme le premier panneau à particules à impact environnemental faible (voire négatif). Les panneaux 2 de matériau rigide 1 sont proposés en différentes épaisseurs par exemple 6, 10, 16, 19, 22, 25, 30 ou 40mm et dans différentes largeurs et longueurs, telles que 1220x2440, 2070x2800, 2070x3700mm. De plus, c'est un matériau sain, car l'inertie de l'époxy apporte au matériau une fois fabriqué une note A+ sur les mesures de COV. Le matériau rigide 1 présente une résistance à la flexion de 25,68 MPa et une résistance à la traction de 28,94 MPa pour des échantillons tests normalisés de section 10 x 3mm et pour une longueur de 100mm.

La densité du matériau rigide 1 pour réaliser des panneaux 2 ou des éléments d'ameublement 3 et 4 est comprise entre 700kg/m³ et 1000kg/m³, de préférence 850kg/m3.

Les vêtements usagés dont peuvent être issues toutes ou partie des fibres textiles 5 utilisées ont une composition parfaitement fidèle à ce qui est présent sur le marché, c'est-à-dire un mélange de fibres textiles naturelles et synthétiques, par exemple des fibres coton et polyester, étant donné que la nature de la fibre n'apporte pas de différence sur les propriétés mécaniques du matériau et que les autres fibres présentes sur le marché sont en trop petites proportions pour influencer les propriétés. Ainsi, les vêtements usagés collectés utilisables ne nécessitent pas d'être triés en fonction de leur composition ce qui est un avantage économique important et aussi un avantage environnemental, car les vêtements utilisables font partie du « tout venant » en fin de ligne de tri. Cependant, la fabrication du matériau rigide 1 nécessite l'emploie de vêtements qui peuvent être effilochés donc pas de leggings, ciré, etc. Comme décrit dans la suite, l'effilochage requis pour la production du matériau rigide 1 est un effilochage classique, sortie de ligne, qui peut s'accommoder de la petite partie résiduelle de points durs et objet métallique contenu dans l'effiloché. Le tri pour écarter le non-effilochable est effectué de manière quasi systématique par les centres de tri et de collecte de vêtements usagers.

Le matériau rigide 1 peut être obtenu en différentes teintes si les vêtements utilisés pour produire les fibres textiles 5 subissent un tri couleur. Contrairement au tri de matière, le tri couleur est un tri simple à effectuer. Ainsi, le tri couleur permet de teinter naturellement le matériau rigide 1 dans sa masse en utilisant ensemble des fibres textiles 5 issues de vêtements usagers de la même couleur ce qui apporte une plus-value esthétique par une gamme de couleurs maîtrisée et permettant d'éviter un traitement de surface ou de finition et ainsi l'utilisation d'adjuvant polluant. Si un tri couleur n'est pas souhaité, le matériau rigide 1 présente une couleur hétérogène résultant du mélange de couleur des fibres textiles 5 utilisées. Outre l'aspect esthétique singulier obtenu, l'absence de tri couleur peut permettre de proposer un matériau rigide 1 moins cher.

Comme décrit ci-dessus, le liant en poudre 6 utilisé pour la fabrication du matériau rigide 1 provient aussi d'un déchet à recycler. Lorsqu'un objet est peint à l'aide de peinture en poudre, c'est à dire par application sur un objet principalement métallique d'une poudre qui émaille à la chaleur, une grosse partie de la poudre projetée n'est pas captée par la pièce. Cette poudre de peinture perdue se retrouve sur le sol de la cabine de peinture ou est captée par l'aspiration des cabines de peinture. Ces poudres de peinture perdues et collectées dans les cabines de peinture sont majoritairement composées d'époxy et de polyester, et plus rarement de polyuréthane. Comme elles n'ont pas subi de processus de chauffe, elles sont parfaitement utilisables sauf pour la peinture, car elles présentent un mélange de couleur et nature entre les apprêts, les peintures et les vernis. Bien que de nature variée et de couleurs mélangées, la composition principale de ces poudres de peinture permet d'obtenir un polymère aux propriétés mécaniques suffisantes pour être utilisées comme liant 6 dans les matériaux rigides 1. Ce nouveau débouché pour ces poudres de peinture toxiques permet de réduire ou d'éviter leur incinération ou pire leur enfouissement.

Comme indiqué ci-dessus et illustré à la figure 3 [Fig. 3] le matériau rigide 1 est obtenu par le mélange du liant en poudre 6 et de fibre textiles 5 pour former un matelas 7 disposé dans un moule 8 ou une bande de transport en continu. Ce matelas 7 est ensuite pressé à chaud par un dispositif de thermopressage 8, qui peut être une partie supérieure de moule 9. La proportion de poudre de liant dans le mélange obtenu se situe entre 10% et 50% du poids du mélange, de préférence 20%, 30% ou 40%. La proportion de liant en poudre 6 dépend du procédé de fabrication utilisé et des propriétés mécaniques requises pour le matériau rigide 1 à produire qui peuvent varier en fonction de ses différents débouchés. Le liant en poudre 6 étant dans un état différent et beaucoup plus fin que les fibres textiles 5, il a tendance à migrer vers le bas du matelas 7, en tombant naturellement dans le fond du moule 8 ou sur la bande de transport continu du matelas 7. Pour pallier ce problème, le liant en poudre 6 est mélangé à chaud aux fibres textiles 5. Pour ce faire, le liant en poudre 6 est porté à sa température de transition visqueuse de la poudre ce qui permet au liant en poudre 6 de se fixer de façon pérenne aux fibres textiles et de rester dispersé de façon homogène dans le matelas 7. D'autres procédés permettant d'éviter la migration du liant en poudre 6 dans le fond du moule 8 peuvent être utilisés, par exemple un procédé de mélange électrostatique ou un mélange après humidification des fibres textiles.

Une fois ce mélange à chaud exécuté, le matelas 7 ainsi obtenu est stable et peut-être utilisé même longtemps après sa confection, sans limites de temps ce qui apporte un avantage substantiel pour la gestion de la production. Ensuite, le matelas 7 est placé entre un moule 8 et une partie supérieure de moule 9 pour être chauffé et pressé simultanément à une température dépendant de la composition du liant en poudre 6 utilisé. Par exemple pour un liant en poudre 6 composé de poudre époxy-polyester le thermopressage du matelas 7 s'effectue à une température d'environ 180°C pendant 8min. Le pressage s'effectue à une pression importante afin d'apporter une densité importante et un état de surface lisse et homogène. Cette pression est comprise entre 10 kg/cm² et 40 kg/cm², préférentiellement à une pression d'environ 30 kg/cm². Le matelas thermopressé est ensuite maintenu sous pression à froid pour contrôler la forme du matériau rigide ainsi obtenu durant son refroidissement et ainsi d'éviter son voilage ou son épaississement par effet de résilience. Cette phase de refroidissement s'effectue soit par le passage dans un autre moule froid aux formes similaires à celui utilisé pour le thermopressage, soit par refroidissement du moule de thermopressage 8.

Le matériau rigide 1 obtenu par ce procédé de fabrication peut trouver sa place dans de nombreux secteurs grâce à sa grande permissivité. Par exemple, le matériau rigide 1 peut servir à créer des panneaux 2 pour la fabrication et l'aménagement comme montré à la figure 1 [Fig. 1]. Ces panneaux 2 sont destinés aux fabricants souhaitant une alternative aux panneaux à particules classiques tels que les panneaux en médium. Ainsi, ces panneaux 2 se présentent sous les mêmes standards dimensionnels, les mêmes épaisseurs, et seront dotés de propriétés mécaniques similaires ou supérieures aux panneaux à base de fibres ligneuses. Le deuxième exemple d'utilisation du matériau rigide 1 concerne le domaine de la fabrication de mobilier. Comme représenté à la figure 2 [Fig. 2] les panneaux rigides 1 peuvent servir à fabriquer directement des parties de meubles telles que des plateaux de table, des dossiers de chaise 4 ou des assises de chaise 3. Dans ce cas, le moule 8 et la partie supérieure de moule 9 auront des formes aptes à former par pressage à chaud le matériau 1 aux formes des éléments de mobilier à produire.

Dans la suite, le procédé de fabrication du matériau rigide 1 sera décrit en détail. La figure 4 [Fig. 4] montre un diagramme illustratif du procédé d'obtention des fibres textiles 5 servant à la fabrication du matériau rigide 1. Le textile destiné à la production du matériau rigide 1 est issu d'un processus de tri qui peut être sous-traité à un opérateur professionnel. À partir du gisement collecté directement ou par l'opérateur professionnel, les vêtements destinés à être réutilisés sont écartés. Le procédé de préparation des fibres textiles 10 commence donc par une l'étape de tri des vêtements réutilisables 10. Les vêtements à recycler, c'est-à-dire qui ne sont pas réutilisables sont récupérés pour la fabrication du matériau rigide 1.

Ensuite, intervient l'étape de tri couleur 12. Le matériau rigide 1 prendra la couleur des fibres textiles utilisées, c'est-à-dire des vêtements utilisés pour produire au moins en partie les fibres textiles 5 qui le compose. Ainsi teinté dans la masse, le matériau rigide 1 acquiert une esthétique particulière qui augmente sa plus-value et lorsqu'il est utilisé sur des supports visibles, il n'a pas besoin d'être peint.

La teinte des panneaux 2 est fonction des textiles choisis. Ainsi pour obtenir une couleur donnée, il suffira de trier en conséquence les vêtements usagers et/ou les autres textiles collectés qui serviront à manufacturer ces panneaux ce qui permet d'obtenir des panneaux dans la teinte souhaitée. Dans la gamme standard de panneaux 2, le gisement textile sera trié en 5 couleurs : cyan, magenta, jaune, noir et blanc. Le tri couleurs des textiles qui est encore réalisé manuellement représente une opération et un coût supplémentaire. Néanmoins, l'automatisation du tri couleurs des textiles est facile à mettre en œuvre. Pour des commandes spéciales, d'autres couleurs peuvent être proposées. Bien que le tri couleur est décrit principalement dans le contexte de la production de panneaux 2, il peut aussi être utilisé pour produire des éléments d'ameublement 3 et 4 dans différentes couleurs. Alternativement, il est possible d'utiliser des pièces de textiles de couleur neutre, par exemple blanche, qui peuvent être teintées à la couleur du matériaux rigide 1 souhaitée.

Après l'étape de tri couleur 12 le textile subit une opération de délissage 13 et de défibrage 14. L'opération de délissage consiste à démanteler les vêtements en vue de supprimer les points durs tels que les boutons, rivets, fermetures éclair, patchs....

L'opération de défibrage consiste à transformer en fibres textiles 5 les pièces de textile provenant des vêtements usagers ou des autres pièces de textile à recycler. Le défibrage peut s'effectuer par effilochage mécanique, broyage thermique ou extrusion chimique. Néanmoins, c'est l'effilochage mécanique qui donne les meilleurs résultats pour la production du matériau rigide 1. L'effilochage consiste à transformer les vêtements ou d'autres pièces de textile en fibres textiles 5 plus ou moins longues comprises dans une plage de calibrage entre 1 et 5 mm, en les passant au travers d'une effilocheuse. L'effilochage est couramment utilisé dans le secteur de l'automobile pour le rembourrage de coussin ou comme isolant. Pour compléter la préparation des fibres textiles 5, celles-ci passent par une étape de soufflerie 15 afin de détacher et de décompacter les fibres textiles 5. Ce décompactage permettra un mélange plus homogène des fibres textiles 5 avec le liant en poudre 6. Les fibres textiles 5 sont ensuite conditionnées en balles.

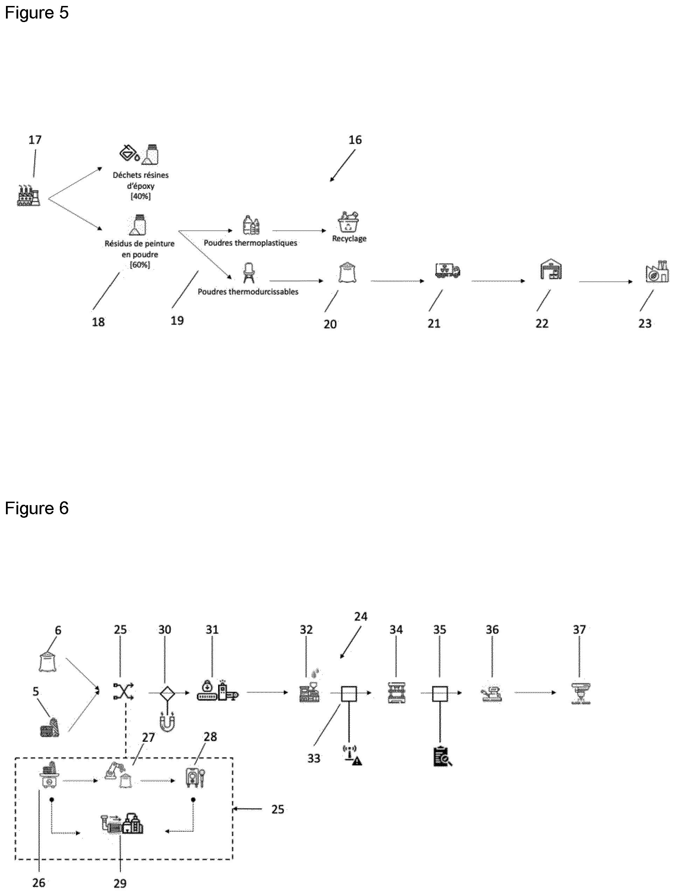

La figure 5 [Fig. 5] représente un diagramme illustratif du procédé d'obtention du liant en poudre 16. Comme indiqué ci-dessus, le liant en poudre 6 utilisé pour la fabrication du matériau rigide 1 provient des pertes de peintre à la poudre dans l'industrie. Le procédé d'obtention du liant en poudre 16 débute par une étape de collecte des pertes de peinture en poudre 17 dans les cabines de peinture de l'industrie. S'en suit une étape de séparation des résidus de peinture en poudre et des déchets de résine d'époxy 18. Les peintures en poudre subissent ensuite une opération de tri entre les poudres thermoplastiques et les poudres thermodurcissables 19. Bien que la fabrication du matériau rigide 1 peut mettre en œuvre des poudres thermoplastiques ou des poudres thermodurcissables, les poudres thermodurcissables sont préférées, car elles permettent d'obtenir un matériau plus rigide présentant de meilleures caractéristiques mécaniques pour la réalisation de panneaux destinés à la construction ou à l'ameublement. Contrairement aux poudres de peinture thermodurcissables, les poudres thermoplastiques peuvent être recyclées pour la fabrication de bouteilles plastiques. Elles ont donc déjà leur filière de recyclage. Les poudres thermodurcissables utilisées sont des poudres d'époxy-polyester, de TGIC, d'acrylique-uréthane ou de polyester-uréthane. Les poudres collectées contiennent le plus souvent un mélange de plusieurs de ces poudres. Les poudres thermodurcissables sont ensuite stockées, par exemple, en BigBag 20 pour être transportées par camion et chauffeur accrédités ADR 21 vers des entreprises de regroupement 22 auprès desquelles le liant en poudre 6 est obtenu pour fabriquer le matériau rigide 1 dans des centres de production 23.

La figure 6 [Fig. 6] représente un diagramme illustrant le procédé de fabrication du matériau rigide 24. Dans la suite, le procédé de fabrication 24 est décrit pour la fabrication de panneaux 2, mais il s'applique mutatis mutandis à la fabrication d'éléments d'ameublement 3 et 4. Les poudres époxy formant le liant en poudre 6 sont mélangées aux fibres textiles 5 dans une proportion de poids de liant comprise entre 20% et 40%. Dans l'exemple décrit le liant en poudre 6 représente 30% du poids total, et les fibres textiles 5 représentent 70% du poids total. Comme décrit plus haut, le liant en poudre 6 et les fibres textiles 5 sont par exemple mélangés à chaud 25 pour éviter que le liant se retrouve au fond du mélange. D'autres procédés de mélange permettant de fixer le liant en poudre 6 sur les fibres textiles 5 sont possibles, par exemple par humidification des fibres textiles 5 ou par effet électrostatique. Pour le mélange les fibres textiles sont pesées 26, par exemple par une bascule à bande, et le poids de fibres textiles 5 déterminera le grammage 27 de liant en poudre 6 à mettre en œuvre. Le liant en poudre est porté à sa température de phase visqueuse 28 pour être mélangé aux fibres textiles 5, par exemple, par un procédé « Airlay » chauffé 29 ou tout autre procédé de nappage pneumatique. Après l'étape d'encollage des fibres textiles 25, celles-ci passent dans un champ magnétique 30 afin d'éliminer tout résidu métallique. Cette étape est préférable, mais pas nécessaire. Ensuite, elles sont réparties uniformément sur une bande transporteuse 31 fonctionnant en continu. Optionnellement, le matelas 7 sur la bande transporteuse subit une étape de pulvérisation d'adjuvant 32. Cette étape de pulvérisation peut être effectuée avant l'étape de mélange à chaud ou sur le matériau après thermopressage. Durant cette étape, un ou plusieurs adjuvants tels qu'un antifungique, un hydrofuge et/ou un ignifugeant sont appliqués par pulvérisation. Avant l'étape de pressage à chaud 34, le matelas 7 subit un contrôle par une balance de poids par unité de surface à rayons X 33. Cette étape avant le pressage permet de vérifier la structure des couches, l'humidité et la répartition de la densité brute sur l'épaisseur du matelas afin de détecter toutes fluctuations. Les corps étrangers à forte densité brute (pierres, métaux...) peuvent de nouveau être détectés et retirés afin de ne pas endommager les presses.

L'opération de pressage à chaud 34 consiste à appliquer une forte pression à chaud pour modifier la densité du matelas et le transformer en un panneau 2 beaucoup plus dense. La température de la presse à chaud varie entre 160°C et 200°C selon la température de catalysation ou de polymérisation du liant en poudre 6. Pour un liant à base de poudre époxy, la température de la presse est préférablement de 180°C. Le thermopressage s'effectue pendant une période comprise entre 6 et 10 min par exemple 8 min, à une pression comprise entre 10 kg/cm² et 40 kg/cm², par exemple 20 ou 30 kg/cm². Par exemple, le thermopressage peut s'effectuer à une température de 200°C pendant 6 min, ou à une température de 180°C pendant 8 min, ou de 170°C pendant 10 min.

Afin de gagner du temps dans la phase de pressage à chaud, le matelas 7 peut subir un pré-pressage pour évacuer l'air contenu dans le matelas 7. Pour la fabrication de panneaux 2 une presse chauffante continue est utilisée. Un refroidissement sous pression a lieu en sortie de presse chauffante afin que le panneau ne se déforme pas lors de son refroidissement. À ce stade, il est préférable d'effectuer un contrôle qualité du panneau 2. Ensuite, le panneau subit un calandrage 36 qui permet de calibrer précisément l'épaisseur souhaitée du panneau et un meilleur fini de ses faces. Le calandrage 36 peut également être utilisé pour refroidir le panneau après son pressage à chaud. Alternativement, le calandrage peut être remplacé par un ponçage des surfaces. Le ponçage peut aussi être effectué en combinaison avec le calandrage 36. Ensuite, le panneau 2 est découpé aux dimensions souhaitées 37.

Comme indiqué dans la description qui précède, les différents aspects de l'invention telle que définie dans les revendications peuvent-être mis en œuvre selon le contexte dans des variantes de configuration différentes de celles décrites ci-dessus. Par exemple, pour la production de panneaux ou d'éléments d'ameublement.

Naturellement, l'invention est décrite dans ce qui précède à titre d'exemple. Il est entendu que l'homme du métier est à même de réaliser différentes variantes de réalisation de l'invention sans pour autant sortir du cadre de l'invention telle que définie dans les revendications.

## Revendications

1. Matériau rigide pour la construction ou l'ameublement comprenant des particules fibreuses reliées entre elles par un liant appartenant à la famille des matériaux thermoplastiques ou thermodurcissables, dans lequel:
- les particules fibreuses sont des fibres textiles (5) ;
- le liant (6) est composé de poudre de peintures principalement constituées d'un liant de peinture, de pigments, de charges et d'additifs divers et provenant des pertes de poudre de peinture non-chauffées récupérées ; et
- la proportion de liant (6) dans le poids total est comprise entre 10% et 50%, de préférence 20%, 30% ou 40%.

2. Matériau rigide selon la revendication 1, **caractérisé en ce que** sa densité est comprise entre 700kg/m³ et 1000kg/m³, de préférence 850kg/m³.

3. Matériau rigide selon l'une des revendications 1 ou 2, **caractérisé en ce que** les fibres textiles (5) sont obtenues par effilochage de pièces textiles dont au moins une partie provient de vêtements usagés.

4. Matériau rigide selon l'une des revendications précédentes, dans lequel les fibres textiles (5) comprennent un mélange de fibres textiles naturelles et synthétiques telles que des fibres de coton ou de polyester, et/ou le matériau rigide (1) est teinté dans la masse par la couleur des fibres textiles (5) utilisés.

5. Matériau rigide selon l'une des revendications précédentes, dans lequel :
- les poudres de peinture (6) utilisées comme liant sont majoritairement composées d'époxy, de polyester, de polyuréthane ou d'acryliques ; et/ou
- les poudres de peinture (6) utilisées comme liant comprennent des poudres de peinture, d'apprêt, de vernis, ou un mélange de ces poudres.

6. Matériau rigide selon l'une des revendications précédentes **caractérisé en ce qu'**il comprend en outre au moins un adjuvant tel qu'un antifungique, un hydrofuge et/ou un ignifugeant.

7. Matériau rigide selon l'une des revendications précédentes **caractérisé en ce qu'**il est obtenu par thermopressage des fibres de textile (5) et du liant (6) ; et/ou son épaisseur finale est obtenue par ponçage, par calandrage ou par pressage à froid.

8. Procédé de fabrication d'un matériau rigide pour la construction ou l'ameublement comprenant les étapes suivantes :
- une étape de collecte des poudres de peinture (17) dans des cabines de peinture pour obtenir un liant en poudre (6) thermoplastique ou thermodurcissable ;
- une étape de mélange (25) du liant en poudre (6) avec des fibres textiles (5) dans une proportion de liant comprise entre 20 et 30% du poids total ;
- une étape d'épandage (30) des fibres textiles (5) mélangées au liant (6) pour former un matelas (7) ; et
- une étape de pressage à chaud (32) dudit matelas (7) à une température dépendant de la nature du liant (6) ;
- préférentiellement après le pressage à chaud le matériau subit une étape de refroidissement avec maintien de la pression.

9. Procédé de fabrication d'un matériau rigide selon la revendication précédente, **caractérisé en ce qu'**il comprend en outre les étapes suivantes de préparation des fibres textiles (5) :
- une étape de triage des couleurs (12) des pièces textiles à recycler ;
- une étape de triage pour écarter les textiles non effilochables ;
- une étape de délissage (13) ;
- une étape de défibrage (14) par effilochage mécanique des pièces textiles triés ; et/ou
- une étape de séparation des fibres textiles par soufflage (15).

10. Procédé de fabrication d'un matériau rigide selon l'une des revendications 8 et 9, **caractérisé en ce qu'**il comprend une étape de collecte de vêtements usagers non réutilisables (11) pour obtenir au moins une partie desdites fibres textiles (5), ou d'autres pièces de textile à recycler.

11. Procédé de fabrication d'un matériau rigide selon l'une des revendications 8 à 10, **caractérisé en ce qu'**il comprend en outre les étapes suivantes :
- une étape de pulvérisation (31) d'au moins un adjuvant ; et/ou
- une étape de calandrage (35) et/ou de ponçage après l'étape de pressage à chaud (32) ou de refroidissement.

12. Procédé de fabrication d'un matériau rigide selon l'une des revendications 8 à 11, **caractérisé en ce qu'**il comprend en outre une étape de découpage (36) dudit matériau rigide (1) en panneaux (2) aux dimensions requises, ou que l'étape de pressage à chaud (32) s'effectue dans un moule pour former des éléments d'ameublement (3, 4).

13. Procédé de fabrication d'un matériau rigide selon l'une des revendications 8 à 12, dans lequel :
- le pressage à chaud (32) s'effectue à une température comprise entre 160°C et 200°C, par exemple 180°C, pendant une période comprise entre 6 et 10 min par exemple 8 min, et/ou une pression comprise entre 10 kg/cm² et 40 kg/cm² par exemple 20 ou 30 kg/cm² ; et/ou
- l'étape de mélange (25) du liant en poudre (6) avec les fibres textiles (5) s'effectue à chaud.

## Patentansprüche

1. Starres Material für Bauzwecke oder Möbel, bestehend aus Faserteilchen, die durch ein Bindemittel aus der Familie der thermoplastischen oder thermisch aushärtenden Materialien miteinander verbunden sind, wobei
- die Faserpartikel Textilfasern (5) sind;
- das Bindemittel (6) aus Farbpulver besteht, das hauptsächlich aus einem Farbbindemittel, Pigmenten, Füllstoffen und verschiedenen Additiven besteht und aus nicht erhitzten Farbresten stammt; und
- der Anteil des Bindemittels (6) am Gesamtgewicht zwischen 10 % und 50 %, vorzugsweise 20 %, 30 % oder 40 % beträgt.

2. Starres Material nach Anspruch 1, **dadurch gekennzeichnet, dass** seine Dichte zwischen⁷⁰⁰ kg/m³und 1000 kg/m³, vorzugsweise 850 kg/m³_{'}liegt.

3. Starres Material nach Anspruch 1 oder 2, **dadurch gekennzeichnet, dass** die Textilfasern (5) durch Ausfransen von Textilstücken gewonnen werden, von denen zumindest einige aus gebrauchter Kleidung stammen.

4. Starres Material gemäß einem der vorstehenden Ansprüche, wobei die Textilfasern (5) eine Mischung aus natürlichen und synthetischen Textilfasern wie Baumwoll- oder Polyesterfasern umfassen und/oder das starre Material (1) durch die Farbe der verwendeten Textilfasern (5) in der Masse gefärbt ist.

5. Starres Material gemäß einem der vorstehenden Ansprüche, wobei:
- die als Bindemittel verwendeten Farbpulver (6) hauptsächlich aus Epoxid, Polyester, Polyurethan oder Acryl bestehen; und/oder
- die als Bindemittel verwendeten Farbpulver (6) Farb-, Grundierungs- oder Lackpulver oder eine Mischung dieser Pulver umfassen.

6. Starres Material gemäß einem der vorstehenden Ansprüche, **dadurch gekennzeichnet, dass** es zusätzlich mindestens einen Zusatzstoff wie einen Pilzschutzmittel, ein wasserabweisendes Mittel und/oder ein Flammschutzmittel umfasst.

7. Starres Material gemäß einem der vorstehenden Ansprüche, **dadurch gekennzeichnet, dass** es durch Thermopressen der Textilfasern (5) und des Bindemittels (6) erhalten wird; und/oder seine endgültige Dicke durch Schleifen, Kalandrieren oder Kaltpressen erhalten wird.

8. Verfahren zur Herstellung eines starren Materials für den Bau oder für Möbel, das die folgenden Schritte umfasst:
- einem Schritt des Sammelns von Farbpulvern (17) in Farbkabinen, um ein thermoplastisches oder thermisch aushärtendes Pulverbindemittel (6) zu erhalten;
- einen Schritt (25) des Mischens des pulverförmigen Bindemittels (6) mit Textilfasern (5) in einem Anteil des Bindemittels zwischen 20 und 30 % des Gesamtgewichts;
- ein Schritt (30) des Ausbreitens der mit dem Bindemittel (6) gemischten Textilfasern (5) zur Bildung einer Matte (7); und
- ein Schritt des Heißpressens (32) der Matte (7) bei einer Temperatur, die von der Beschaffenheit des Bindemittels (6) abhängt;
- vorzugsweise nach dem Heißpressen wird das Material unter Aufrechterhaltung des Drucks einem Abkühlungsschritt unterzogen.

9. Verfahren zur Herstellung eines starren Materials gemäß dem vorstehenden Anspruch, **dadurch gekennzeichnet, dass** es ferner die folgenden Schritte zur Vorbereitung von Textilfasern (5) umfasst:
- einen Farbsortierungsschritt (12) für die zu recycelnden Textilteile;
- einen Sortierschritt zum Entfernen nicht ausfransender Textilien;
- einen Glättungsschritt (13);
- einem Schritt des Zerfaserns (14) durch mechanisches Ausfransen der sortierten Textilstücke; und/oder
- einem Schritt des Trennens der Textilfasern durch Blasen (15).

10. Verfahren zur Herstellung eines starren Materials gemäß einem der Ansprüche 8 und 9, **dadurch gekennzeichnet, dass** es einen Schritt des Sammelns von nicht wiederverwendbarer Altkleidung (11) umfasst, um zumindest einen Teil der genannten Textilfasern (5) oder andere zu recycelnde Textilstücke zu erhalten.

11. Verfahren zur Herstellung eines starren Materials gemäß einem der Ansprüche 8 bis 10, **dadurch gekennzeichnet, dass** es ferner die folgenden Schritte umfasst:
- einen Schritt des Besprühens (31) mit mindestens einem Hilfsstoff; und/oder
- ein Kalandrieren (35) und/oder Schleifen nach dem Heißpressen (32) oder Abkühlen.

12. Verfahren zur Herstellung eines starren Materials gemäß einem der Ansprüche 8 bis 11, **dadurch gekennzeichnet, dass** es ferner einen Schritt (36) des Schneidens des starren Materials (1) in Platten (2) mit den erforderlichen Abmessungen umfasst, oder dass der Heißpressschritt (32) in einer Form durchgeführt wird, um Möbelkomponenten (3, 4) zu formen.

13. Verfahren zur Herstellung eines starren Materials gemäß einem der Ansprüche 8 bis 12, wobei:
- das Heißpressen (32) bei einer Temperatur zwischen 160 °C und 200 °C, beispielsweise 180 °C, für einen Zeitraum zwischen 6 und 10 Minuten, zum Beispiel 8 Minuten, und/oder bei einem Druck zwischen 10 kg/cm² und 40 kg/cm² , beispielsweise 20 oder 30 kg/cm² , durchgeführt wird; und/oder
- Der Schritt (25) des Mischens des pulverförmigen Bindemittels (6) mit den Textilfasern (5) wird heiß durchgeführt.

## Claims

1. Rigid material for construction or furniture comprising fibrous particles bonded together by a binder belonging to the family of thermoplastic or thermosetting materials, wherein:
- the fibrous particles are textile fibres (5);
- the binder (6) is composed of paint powder constituted mainly of a paint binder, pigments, fillers and various additives, and originating from unheated paint losses; and
- the proportion of binder (6) in the total weight is between 10% and 50%, preferably 20%, 30% or 40%.

2. Rigid material as claimed in claim 1, **characterized in that** its density is between 700kg/m³ and 1000kg/m³, preferably 850kg/m³.

3. Rigid material as claimed in claim 1 or 2, **characterised in that** the textile fibers (5) are obtained by fraying textile pieces, at least some of which come from used clothing.

4. Rigid material according to one of the preceding claims, wherein the textile fibers (5) comprise a mixture of natural and synthetic textile fibers such as cotton or polyester fibers, and/or the rigid material (1) is dyed in the mass by the color of the textile fibers (5) used.

5. Rigid material according to one of the preceding claims, wherein:
- the paint powders (6) used as binders are mainly composed of epoxy, polyester, polyurethane or acrylics; and/or
- the paint powders (6) used as a binder comprise paint, primer or varnish powders, or a mixture of these powders.

6. Rigid material according to one of the preceding claims, **characterised in that** it further comprises at least one adjuvant such as an antifungal agent, a water repellent and/or a flame retardant.

7. Rigid material according to one of the preceding claims, **characterised in that** it is obtained by thermopressing of the textile fibers (5) and binder (6); and/or its final thickness is obtained by sanding, calendering or cold pressing.

8. Process for manufacturing a rigid material for construction or furniture, comprising the following steps:
- a step of collecting paint powders (17) in paint booths to obtain a thermoplastic or thermosetting powder binder (6);
- a step (25) of mixing the powdered binder (6) with textile fibers (5) in a proportion of binder of between 20 and 30% of the total weight;
- a step (30) of spreading the textile fibers (5) mixed with the binder (6) to form a mat (7); and
- a step of hot pressing (32) of said mat (7) at a temperature depending on the nature of the binder (6);
- preferably after hot pressing, the material undergoes a cooling step while maintaining pressure.

9. Process for manufacturing a rigid material according to the preceding claim, **characterised in that** it further comprises the following steps of preparing textile fibers (5):
- a color sorting stage (12) for the textile parts to be recycled;
- a sorting stage to remove non-fraying textiles;
- a smoothing step (13);
- a stage of defibration (14) by mechanical fraying of the sorted textile pieces; and/or
- a step of separating the textile fibers by blowing (15).

10. Process for manufacturing a rigid material according to one of claims 8 and 9, **characterised in that** it comprises a step of collecting non-reusable used clothing (11) in order to obtain at least some of the said textile fibers (5), or other pieces of textile to be recycled.

11. Process for manufacturing a rigid material according to one of claims 8 to 10, **characterised in that** it further comprises the following steps:
- a step of spraying (31) with at least one adjuvant; and/or
- a calendering (35) and/or sanding step after the hot pressing (32) or cooling step.

12. Process for manufacturing a rigid material according to one of claims 8 to 11, **characterised in that** it further comprises a step (36) of cutting said rigid material (1) into panels (2) of the required dimensions, or that the hot-pressing step (32) is carried out in a mould to form furniture components (3, 4).

13. Process for manufacturing a rigid material according to one of claims 8 to 12 wherein:
- hot pressing (32) is carried out at a temperature of between 160°C and 200°C, for example 180°C, for a period of between 6 and 10 min, for example 8 min, and/or at a pressure of between 10 kg/cm² and 40 kg/cm² , for example 20 or 30 kg/cm² ; and/or
- the step (25) of mixing the powdered binder (6) with the textile fibers (5) is carried out hot.
